(19) Europäisches Patentamt
European Patent Office
Office européen des brevets

(11) Veröffentlichungsnummer: **0 224 606**
**A1**

(12) **EUROPÄISCHE PATENTANMELDUNG**

(21) Anmeldenummer: **85115287.6**

(51) Int. Cl.⁴: **G01S 15/10**

(22) Anmeldetag: **02.12.85**

(43) Veröffentlichungstag der Anmeldung:
**10.06.87 Patentblatt 87/24**

(84) Benannte Vertragsstaaten:
**DE**

(71) Anmelder: **Honeywell Regelsysteme GmbH**
**Kaiserleistrasse 55**
**D-6050 Offenbach am Main(DE)**

(72) Erfinder: **Drefahl, Dieter, Dr.**
**Pferdslache 13**
**D-6450 Hanau(DE)**

(74) Vertreter: **Herzbach, Dieter et al**
**Honeywell Europe S.A. Holding KG Patent- und Lizenzabteilung Kaiserleistrasse 55**
**Postfach 184**
**D-6050 Offenbach am Main(DE)**

(54) **Verfahren zur Abstandsmessung und Vorrichtung zur Durchführung des Verfahrens.**

(57) Bei einem Verfahren zur Abstandsmessung zwischen einem Wellen, insbesondere Ultraschallwellen, aussendenden bzw. empfangenden Sender/Empfänger und einem die Wellen reflektierdenden Objekt werden die Wellen während einer Zeitdauer ($t_a$ ) ausgesendet, die mindestens der Wellenlaufzeit zwischen Sender und Empfänger entspricht. Die Zeit ($t_s$) zwischen Sendestopp und Ende der empfangenen reflektierten Welle stellt hierbei ein Maß für die Objektentfernung dar.

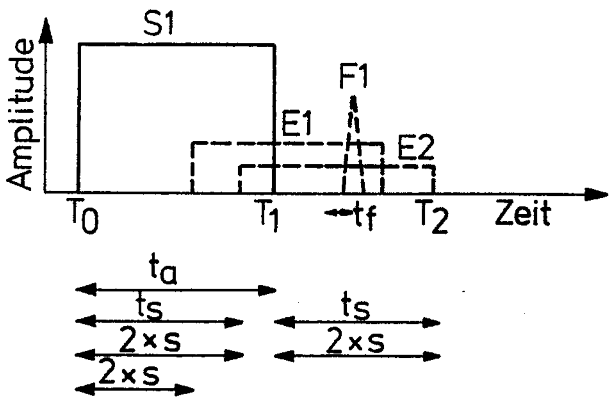


Fig. 1b

EP 0 224 606 A1

Xerox Copy Centre

# Verfahren zur Abstandsmessung und Vorrichtung zur Durchführung des Verfahrens

Die vorliegende Erfindung bezieht sich auf ein Verfahren zur Abstandsmessung nach dem Gattungsbegriff des Patentanspruches 1 sowie auf eine Vorrichtung zur Durchführung dieses Verfahrens.

Zur Messung des Abstandes eines Objektes ist es bekannt, mittels eines Sende/Empfangswandlers eines Sensors einen Impuls oder eine kurze Impulsfolge auszusenden und die zwischen dem Aussenden des Impulses bzw. der kurzen Impulsfolge und dem Empfang des reflektierten Impulses bzw. der reflektierten kurzen Impulsfolge verstrichene Zeit zu messen, die dem doppelten Abstand zwischen dem Sensor und dem Objekt entspricht. Hierbei werden vorzugsweise Ultraschallwellen verwendet.

Fehlmessungen können auftreten, wenn der Sendeimpuls auf ein Objekt zwischen Sensor und dem eigentlichen zu messenden Objekt trifft oder wenn ein Sonstiger Störimpuls in der Zeit zwischen Sendeimpuls und empfangenem Echoimpuls auftritt. Der Meßfehler kann sich dan zwischen 0 und 100% bewegen.

Es ist daher die Aufgabe der vorliegenden Erfindung, ein Verfahren zur Abstandsmessung anzugeben, das auch bei hohem Störpegel und bei unerwünschten Nahechos zuverlässig arbeitet. Die Lösung dieser Aufgabe gelingt gemäß den kennzeichnenden Merkmalen des Patentanspruches 1. Weitere vorteilhafte Ausgestaltungen des erfindungsgemäßen Verfarhrens sowie einer Schaltungsanordnung zur Durchführung des Verfarhrens sind den Unteransprüchen entnehmbar.

Anhand eines in den Figuren der beiliegenden Zeichnung dargestellten Ausführungsbeispieles sie im folgenden die Erfindung näher erläutert. Es zeigen:

Fig. 1a ein Diagramm zur Veranschaulichung des bekannten Verfahrens;

Fig. 1b ein Diagramm zur Veranschaulichung des erfindungsgemäßen Verfahrens;

Fig. 2a eine erfindungsgemäße Schaltungsanordnung;

Fig. 2b ein zu Fig. 2a zugehöriges Impulsdiagramm;

Fig. 3 eine schematische Schaltungsanordnung für die Temperaturregelung der Oszillatorfrequenz;

Fig. 4 eine Schaltungsanordnung für die automatische Frequenzregelung eines Tondecoders;

Fig. 5 eine Schaltungsanordnung für die automatische Verstärkungsregelung des dem Tondecoder zugeführten Wandlersignales; und

Fig. 6 ein Diagramm zur Veranschaulichung der Auswirkung der Verstärkungsregelung.

Gemäß Fig. 1a wird ein Sendeimpuls bzw. eine kurze Impulsfolge S1 von einem nicht dargestellten Wandler abgestrahlt. Nach Ablauf der Zeit $t_s$ wird ein Echo von einem Zielobjekt E2 empfangen, wobei diese Zeit proportional der doppelten Distanz 2s des Zielobjektes ist. Befindet sich ein weiteres Zielobjekt E1 zwischen Sender und Zielobjekt E2 oder tritt ein anderweitig hervorrufender Störimpuls F1 vor Empfang des Echos von dem Zielobjekt E2 auf, so wird die Messung bei dieser bekannten Laufzeitmessung unter Umständen beträchtlich verfälscht.

Um diesen Fehler zu beseitigen,wird erfindungsgemäß das in Fig. 1b dargestellte Verfahren vorgeschlagen. Hierbei wird während der Zeit $t_a$ von einem nicht dargestellten Wandler ein Signal fester Frequenz gesendet, wobei die Zeit $t_a$ folgender Bedingung genügt

$t_a \geq 2s / v$

mit s = maximale Objektdistanz und

v = Ausbreitungsgeschwindigkeit des Signales im Medium.

Nach Ablauf der Zeit $t_s$, die proportional der doppelten Distanz 2s des Meßobjektes E2 ist, trifft das reflektierte Echosignal E2' erstmals wieder am Wandler ein, kann aber nicht erkannt werden, solange mit dem wesentlich höheren Sende-Signalpegel S1' gesendet wird. Vom Zeitpunkt T1 bis zum Zeitpunkt T2 ist der Wandler in der Lage, das Echosignal E2' zu empfangen. Diese Zeit T2 -T1, während der ein Echosignal empfangen werden kann, ist ebenfalls durch $t_s$ gegeben und dem doppelten Objektabstand 2s proportional.

Jedes Objekt, das näher als das eigentlich anvisierte Zielobjekt ist, kann jetzt höchstens die Signalamplitude, nicht aber die Zeit T2 -T1 verändern. Ebenso kann ein Störimpuls F1 beliebiger zeitlicher Lage mit der Impulslänge $t_f$ jetzt z.B. durch überdecken des Nutzsignales die Messung nur um den Bruchteil $t_f/t_s$ verfälschen, d.h. verkürzen.

Das vorstehend beschriebene Verfahren wird vorzugsweise bei Ultraschallsensoren angewendet; es liegt jedoch auf der Hand, daß es auch bei der Verwendung von elektromagnetischen Wellen Anwendung finden kann.

Gemäß Fig. 2a ist eine Schaltungsanordnung zur Durchführung des erfindungsgemäßen Verfahrens dargestellt. In dieser Schaltungsanordnung moduliert ein niederfrequenter Oszillator 10, der z.B. einen 30 Hz Taktimpuls liefert, einen nachgeschalteten hochfrequenten Oszillator 12, der z.B. mit 215 kHz schwingt. Die beiden Oszillatoren 10 und 12 sind als spannungsgesteuerte Oszillatoren -(VCO) ausgebildet und ihre Frequenz wird über einen Temperaturregler 14, der eine temperaturabhängige Spannung liefert, der veränderten Temperatur nachgeführt. Hierdurch kann der bei unterschiedlichen Temperaturen unterschliedlichen Signalgeschwindigkeit im Medium Rechnung getragen werden.

Das modulierte HF-Signal steurert über einen Ausgangstreiber 16 einen electroakustischen Wandler 18 an. Dieser Wandler strahlt während der Zeitdauer $t_a = T_1 - T_0$,die durch den niederfrequenten Taktimpuls vorgegeben ist, das Signal S1' gemäß Fig. 1b ab.

Die von beiden Zielobjekten empfangenen Echosignale E1' und E2' werden daher ebenfalls während der Zeitdauer $t_a$empfangen, wobei allerdings die in Fig. 1b dargestellte unterschiedliche Überlappung mit dem Sendesignal S1' auftritt.

Der gleiche Wandler 18 dient nach dem Abklingen des Sendesignales dem Empfang des Echosignale. Die empfangenen und gewandelten Signale werden einem Vorverstärker 20 zugeführt, der seinerseits einen als Phasenverriegelungsschleife - (PLL) ausgebildeten Tondecoder 22 ansteuert. Dazwischen kann mit Vorteil noch eine Stufe 24 zur automatischen Verstärkungsregelung (AGC) vorgesehen sein, was später noch näher erläutert wird. Der Tondecoder 22 wird hinsichtlich der Frequenz, auf die er einrastet, durch eine Stufe 26 zur automatischen Frequenzregelung (AFC) nachgeführt. Auch dies soll nachstehend noch näher erläutert werden.

Das von dem Tondecoder 22 aus dem Empfangssignal gewonnene Signal wird zusammen mit dem Taktsignal des Oszillators 10 einem Phasendecoder 28 zugeführt, der beide Signale einer logischen UND-Verknüpfung unterzieht, um ein Ausgangssignal zu gewinnen, das über einen Ausgangstreiber 30 ausgegeben wird.

Fig. 2b zeigt verschiedene in der Schaltungsanordnung gemäß Fig. 2a auftretende Signale. Von oben nach unten stellen diese Signale der Reihe nach dar: Das von dem elektroakustischen Wandler 18 abgestrahlte Sendesignal, das von dem elekroakustischen Wandler 18 umgesetzte Empfangssignal, das von dem niederfrequenten Oszillator 10 abgegebene Signal, das von dem Tondecoder 22 erzeugte Signal und das von dem Phasendecoder 28 erzeugte Ausgangssignal.

Wie man erkennt, wird der mit der hohen Frequenz $f_2$ schwingende Oszillator 12 durch den mit der niedrigen Frequenz $f_1$ schwingenden Taktoszillator 10 ein-und ausgeschaltet. Die Taktfrequenz $f_1$ ist hierbei durch folgende Beziehung vorgegeben:

$f_1 = 1/(t_a + t_b)$

wobei $t_a$ der Sendezeit und $t_b$ der Empfangszeit entspricht.

Beide Zeiten müssen jeweils mindestens solange sein, wie die Signallaufzeit 2s/v zwischen Sensor und Zielobjekt, und diese Zeiten sind konstant, wenn man einmal von dem Temperatureinfluß absieht.

Das während der gesamten Zeit $t_a$ gesendete Signal trifft nach der Zeit $t_o = 2s/v$ auf den Wandler auf, so daß nach Beenden des Sendens während der Zeit $t_a$ für die gesamte Zeitdauer $t_o$ am Wandler ein Signal anliegt. Somit ist das Verhältnis $t_o/t_a$ linear proportional zum Abstand, wobei folgendes gilt:

$0 \leq t_o/t_a \leq 1$ für $0 \leq s \leq s$ (max) und

$t_{a,b} \geq 2s$ (max)/v

Sowohl die Eigenfrequenz der technisch realisierten electroakustischen Wandler wie auch die Laufzeit des Schalls in der Luft sind abhängig von der Temperatur. Dabei ist im allgemeinen ein Sinken der Eigenfrequenz des Schallwandlers mit wachsender Temperatur vorzufinden, und die Schallgeschwindigkeit in Luft steigt mit wachsen der Temperatur. Um einen von der Temperatur unabhängigen Quotienten $t_o/t_a$ zu erhalten, $t_a$ bzw. die Frequenz $f_1$ des niederfrequenten Oszillators temperaturabhängig geregelt werden.

Fig. 3 zeigt eine Schaltungsanordnung, die zu diesem Zweck Anwendung finden kann. Zwischen die Betriebsspannung $U_b$ und die Bezugsspannung ist ein Spannungsteiler geschaltet, der in Reihe einen ersten Widerstand R1, einen Widerstand mit negativem Temperaturkoeffizienten NTC und einen zweiten Widerstand R2 umfaßt. An dem temperaturabhängigen Widerstand NTC wird nunmehr eine temperaturproportionale Spannung abgegriffen und sowohl dem Oszillator 10 als auch dem Oszillator 12 zugeführt. Beide Oszillatoren sind als spannungsgesteuerte Oszillatoren (VCO) ausgebildet, so daß ihre Frequenz jeweils der Temperatur nachgeführt wird.

Um eine hohe Reichweite bei gleichzeitiger Störsicherheit zu erzielen, sollte der Tondecoder 22 möglichst schmalbandig sein. Übliche als integrierte Schaltung ausgebildete Tondecoder haben deshalb eine kleine Bandbreite von z.B. 10% der Grundfrequenz. Unter Grundfrequenz ist hierbei die Frequenz des freischwingenden spannungsgesteuerten Oszillators VCO einer Phasenverriegelungsschaltung PLL zu verstehen. Ein Tondecoder gibt in der Regel ein logisches Signal mit dem niedriegen Pegel "O" aus, wenn sein Oszillator VCO auf ein an seinem Eingang anliegendes Signal mit ausreichender Amplitude und mit einer Frequenz f (VCO) ± 5% "einrastet". Um nun trotz des durch die vorstehend beschriebene Temperaturregelung bedingten breiten Frequenzbereiches des Oszillators 12 zur Abstimmung auf die Eigenfrequenz des Schallwandlers 18 einen schmalbandigen Tondecoder verwenden zu können, wird eine automatische Frequenznachregelung AFC 26 verwendet, die in Fig. 4 näher dargestellt ist:

Gemäß Fig. 4 wird die Grundfrequenz des in dem Tondecoder 22 enthaltenen Oszillators durch den Widerstand R3 und die Kondensatoren C1 und C2 bestimmt. Der Ausgang des Tondecoders 22 weist den niedrigen Pegel auf, wenn die in ihm enthaltene Phasenverriegelungsschleife eingerastet ist. Es sei nun ein beliebiger Zeitpunkt betrachtet, zu dem der Kondensator $C_0$ entladen ist. In diesem Fall wird der Transistor T1 an seiner Basis gesperrt, so daß lediglich der Kondensator C2 wirksam ist und die am Ausgang ausgegebene Frequenz $f'_2$ hoch ist entsprechend der maximalen Grundfrequenz. Solange $f'_2$ höher ist als die am Eingang anliegende Frequenz $f_2 \pm 5\%$, wobei diese Frequenz auf Grund der Frequenzregelung von 215 kHz abweichen kann, gibt der Tondecoder an seinem Ausgang ein Signal mit hohem Pegel aus. Hierdurch wird über die Diode $D_0$ der Kondensator $C_0$ aufgeladen. Dies hat zur Folge, daß der Transistor T1 allmählich durchgesteuert wird, so daß der Kondensator C1 anteilig hinzugeschaltet wird. Die wirksame Kapazität ist sodann durch $C2 + \alpha C1$ ($0 \leq \alpha \leq 1$) gegeben, wodurch die am Ausgang ausgegebene Grundfrequenz $f'_2$ sinkt. Dies geschieht solange und zwar während der Sendezeit $t_a$ bis $f'_2 = f_2 + 5\%$ ist, wodurch der obere Fangbereich der Phasenverriegelungsschleife erreicht wird. Jetzt rastet die Phasenverriegelungsschleife ein, und der Ausgang des Tondecoders 22 nimmt den niedrigen Pegel ein, wodurch die Aufladung des Kondensators $C_0$ beendet wird. Solange jetzt ein Nutzsignal anliegt, d.h. während der restlichen Zeit von $t_a + t_0$ wird der Kondensator $C_0$ nut sehr geringfügig entladen, so daß die Phasenverriegelungsschleife eingerastet bleibt.

Erst wenn das Nutzsignal ausbleibt, d.h. nach der Zeit $t_a + t_0$ nimmt der Ausgang des Tondecoders wieder den hohen Pegel ein, wodurch der Kondensator $C_0$ weiter aufgeladen wird. Wenn nunmehr die Spannung des Kondensators $C_0$ die Höckerspannung des Unijunction-Transistors T2 erreicht, so wird dieser durchgesteuert und der Kondensator $C_0$ entladen. Daraufhin beginnt der Zyklus von neuem. Durch geeignete Wahl der Kondensatoren und Widerstände ist sicherzustellen, daß die Zykluszeit klein im Hinblick auf die Zeit $t_a$ ist, d.h. daß die Phasenverriegelungsschleife in jedem Fall während der Sendezeit $t_a$ einrastet.

Um eine abstandsproportionale Ausgangsspannung zu erzeugen, kann das vom Phasendecoder 28 gelieferte Signal über einen Pufferverstärker auf ein Siebglied durchgeschaltet werden, wobei dies während der Zeit $t_b$ geschieht. Während der Zeit $t_a$ ist der Pufferverstärker hochohmig geschaltet und beeinflußt die Spannung am Siebglied nicht. Wählt man einen invertierenden Pufferverstärker, so erhält man als Ausgangsspannung

$U_{out} = t_0/t_a \bullet U_b = s$

Bei einem nicht invertierenden Pufferverstärker stellt sich die Ausgangsspannung wie folgt dar:

$U_{out} = U_b - U_b \bullet (t_0/t_a) = S_{max} - S$

Somit ist eine abstandsproportionale Ausgangsspannung als auch eine mit sinkendem Abstand steigende Spannung erzielbar, wobei letztere Signalerzeugung insbesondere bei Füllstandsmessungen sinnvoll ist, da dann bei oberhalb des zu messenden Füllgutes angeordnetem Sensor die Ausgangsspannung mit steigendem Füllstand steigt.

Das bisher beschriebene Verfahren und die zugehörige Schaltungsanordnung ermittelt den Abstand des weitesten noch erfaßten Zielobjektes. Dies ist für viele Anwendungen vorteilhaft und einer der prinzipiellen Vorzüge der beschriebenen Anordnung. Manchmal ist es jedoch erwünscht, die Abstandsmessung zum größten Zielobjekt durchzuführen. Eine Schaltungsanordnung, die dies leistet, sowie ein erläuterndes Impulsdiagramm sind in den Figuren 5 und 6 dargestellt.

Gemäß Fig. 5 umfaßt die Schaltungsanordnung 24 zur automatischen Verstärkungsregelung (AGC) einen Operationsverstärker OP, dessen einer Eingang an der halben Betriebs spannung $U_{b/2}$ liegt und dessen anderer Eingang von dem von dem Vorverstärker kommenden Echosignal beaufschlagt wird. Als dynamischer Abschwächer dient ein Feldeffekttransistor FET, der zwischen die das Echosignal führende Leitung und die Betriebsspannung geschaltet ist. Ein Kondensator C3 ist von dem Echosignal aufladbar und beeinflußt das Gate G des Feldeffekttransistors FET. Ohne Signal am Eingang wird die Source-Gate-Spannung des Feldeffekttransistors FET durch eine Zenerdiode ZD vorgegeben, so daß der Feldeffekttransistor sperrt. Ein sehr kleines Eingangssignal wird daher nicht bedämpft. Steigt jedoch die Amplitude am Eingang, so wird der Kondensator C3 aufgeladen, so daß die Source-Gate-Spannung des Feldeffekttransistors sinkt und der Innenwiderstand des Feldeffekttransistors abnimmt. Hierdurch wird die Eingangsspannung stärker bedämpft.

Aus Fig. 6 ist erkennbar, daß die Amplitude des Echosignales E2 unter den Triggerpegel des Tondecoders abgesenkt wird, so daß nur noch das Echosignal E1 ausgewertet wird. Mit dieser Schaltung kann sichergestellt werden, daß Objekte ab einer bestimmeten Distanz nicht mehr erfaßt werden. Daneben werden bei hoher Signalamplitude durch die reduzierte Verstärkung auch Störsignale gering verstärkt, wodurch die Störsicherheit steigt.

Ein schalter S ist vorgesehen, um den Feldeffekttransistor FET herauszutrennen und somit die Verstärkungsregelung auszuschalten.

## Ansprüche

1. Verfahren zur Abstandsmessung zwischen einem Wellen, insbesondere Ultraschallwellen, aussendenden bzw. empfangenden Sender/Empfänger und einem die Wellen reflektierenden Objekt, **dadurch gekennzeichnet,** daß die Wellen während einer Zeitdauer ($t_a$) ausgesendet werden, die mindestens der Wellenlaufzeit (2s/v) zwischen Sender und Empfänger entspricht und daß die Zeit zwischen Sendestop und Ende der empfangenen reflektierten Welle ein maß für die Objektentfernung darstellt.

2. Verfahren nach Anspruch 1, **darurch gekennzeichnet,** daß ein Wandler sowohl zum Senden als auch für den Empfang der Wellen verwendet wird.

3. Verfahren nach Anspruch 1, **dadurch gekennzeichnet,** daß eine hochfrequente Welle durch eine niederfrequente Welle moduliert wird.

4. Verfahren nach Anspruch 3, **gekennzeichnet durch** die Verwendung einer niederfrequenten Rechteckwelle.

5. Verfahren nach Anspruch 4, **gekennzeichnet durch** die Ein-und Ausschaltung .der hochfrequenten Welle mit der durch die niederfrequente Welle vorgegebenen Taktfrequenz.

6. Verfahren nach Anspruch 5, **dadurch gekennzeichnet,** daß die Ein-und Ausschaltzeiten ($t_a$, $t_b$) der hochfrequenten Welle folgender Bedingungen genügen:
$t_{a,b} \geq 2s/v$, wobei
s = einfache Objektdistanz und
v = Ausbreitungsgeschwindigkeit der Welle.

7. Verfahren nach Anspruch 1 oder einem der folgenden Ansprüche, **gekennzeichnet durch** die Vorgabe eines Schwellwertes für die Amplitude und die Auswertung der Frequenz der hochfrequenten Welle.

8. Vorrichtung zur Durchführung des Verfahrens nach einem der vorangehenden Ansprüche, **dadurch gekennzeichnet,** daß ein niederfrequenter Taktgenerator (10) zum Ein-und Ausschalten eines hochfrequenten Oszillators (12) angeordnet ist, und das modulierte Signal einem Wandler (18) zugeführt wird.

9. Vorrichtung nach Anspruch 8, **dadurch gekennzeichnet,** daß der Taktgenerator (10) und der hochfrequente Oszillator (12) als spannungsgesteurte Oszillatoren (VCO) ausgebildet sind und daß die Spannung an einem temperaturabhängigen Widerstand (NTC) den Oszillatoren (10, 12) als Regelspannung zugeführt wird.

10. Vorrichtung nach Anspruch 9, **gekennzeichnet durch** einen als Phasenverriegelungsschleife (PLL) ausgebildeten Tondecoder (22) dem das Empfangssignal zugeführt wird.

11. Vorrichtung nach Anspruch 10, **dadurch gekennzeichnet,** daß die Rastfrequenz des Tondecoders (22) mittels einer Stufe (26) für eine automatische Frequenzregelung (AFC) nachgeführt wird.

12. Vorrichtung nach Anspruch 10, **dadurch gekennzeichnet,** daß das Empfangssignal dem Tondecoder (22) über eine Stufe (24) für eine automatische Verstärkungsregelung (AGC) zuführbar ist.

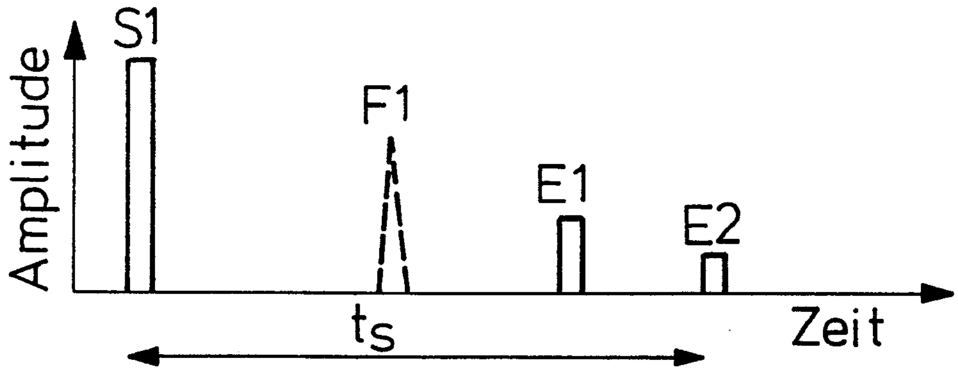
S1
F1
E1
E2
Amplitude
$t_s$
Zeit

Fig. 1a

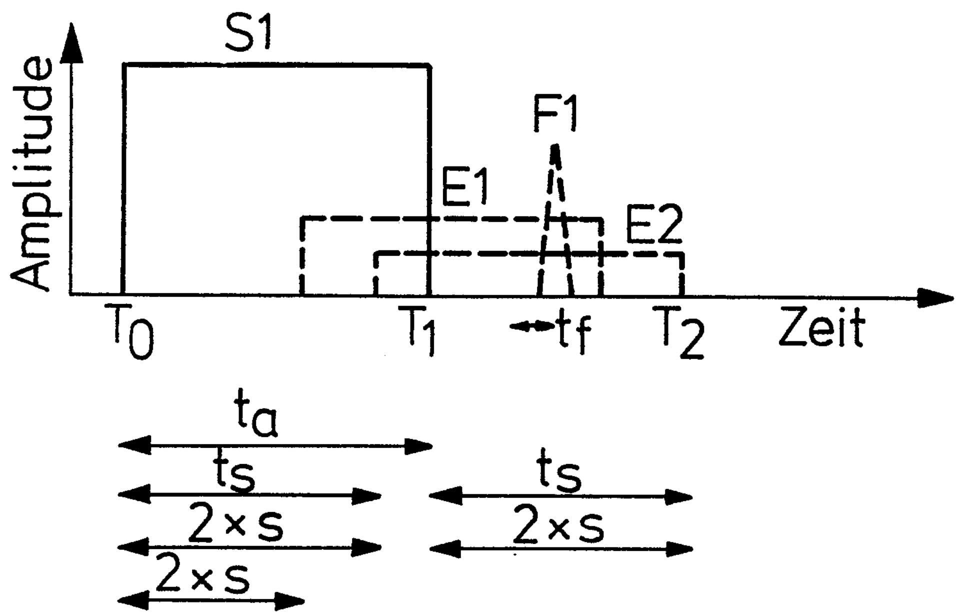
S1
F1
E1
E2
Amplitude
$T_0$
$T_1$
$t_f$
$T_2$
Zeit
$t_a$
$t_s$
2×s
2×s
$t_s$
2×s

Fig. 1b

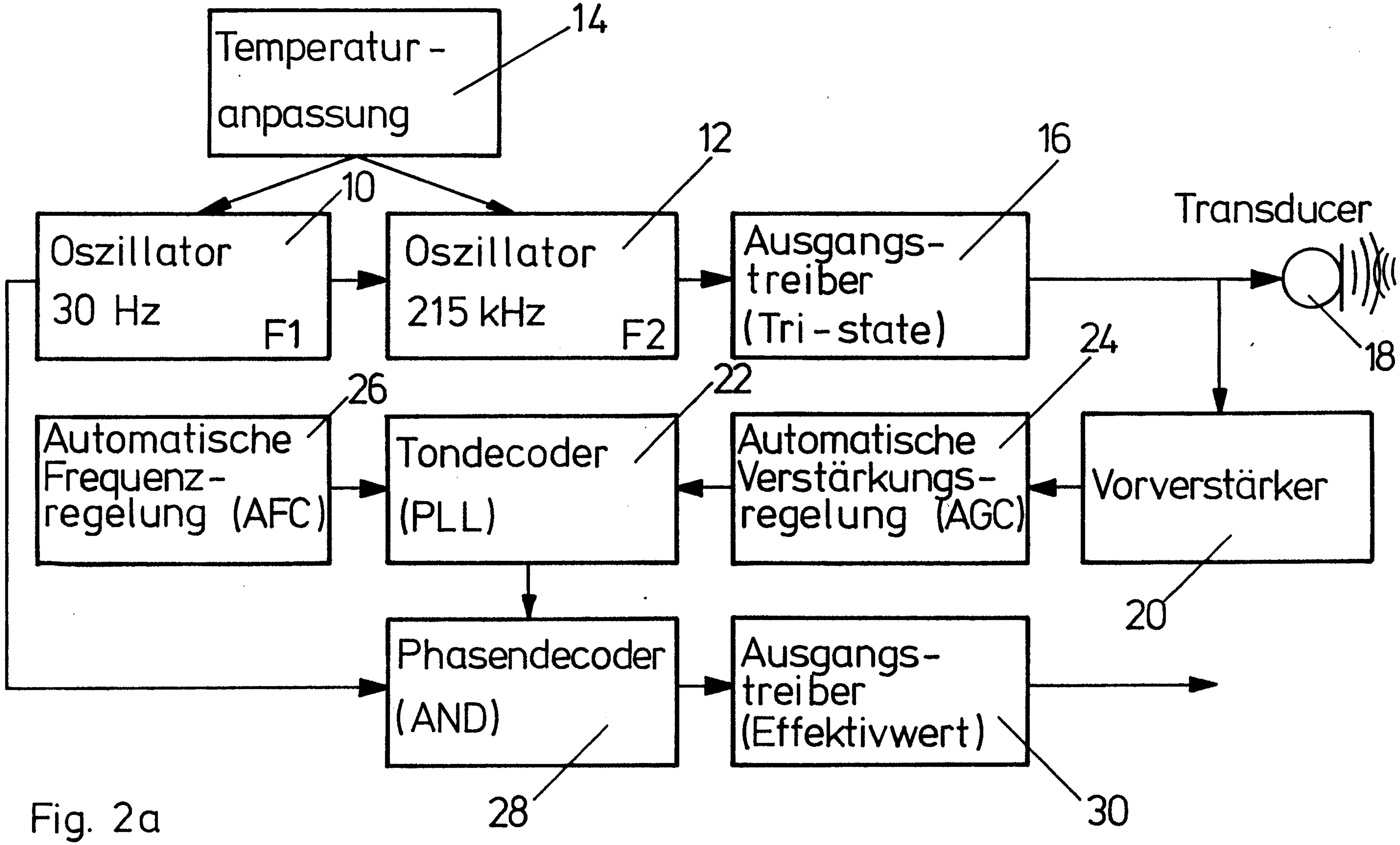
Temperatur-
anpassung
14
Oszillator
30 Hz
F1
10
Oszillator
215 kHz
F2
12
Ausgangs-
treiber
(Tri-state)
16
Transducer
18
Automatische
Frequenz-
regelung (AFC)
26
Tondecoder
(PLL)
22
Automatische
Verstärkungs-
regelung (AGC)
24
Vorverstärker
20
Phasendecoder
(AND)
28
Ausgangs-
treiber
(Effektivwert)
30

Fig. 2a

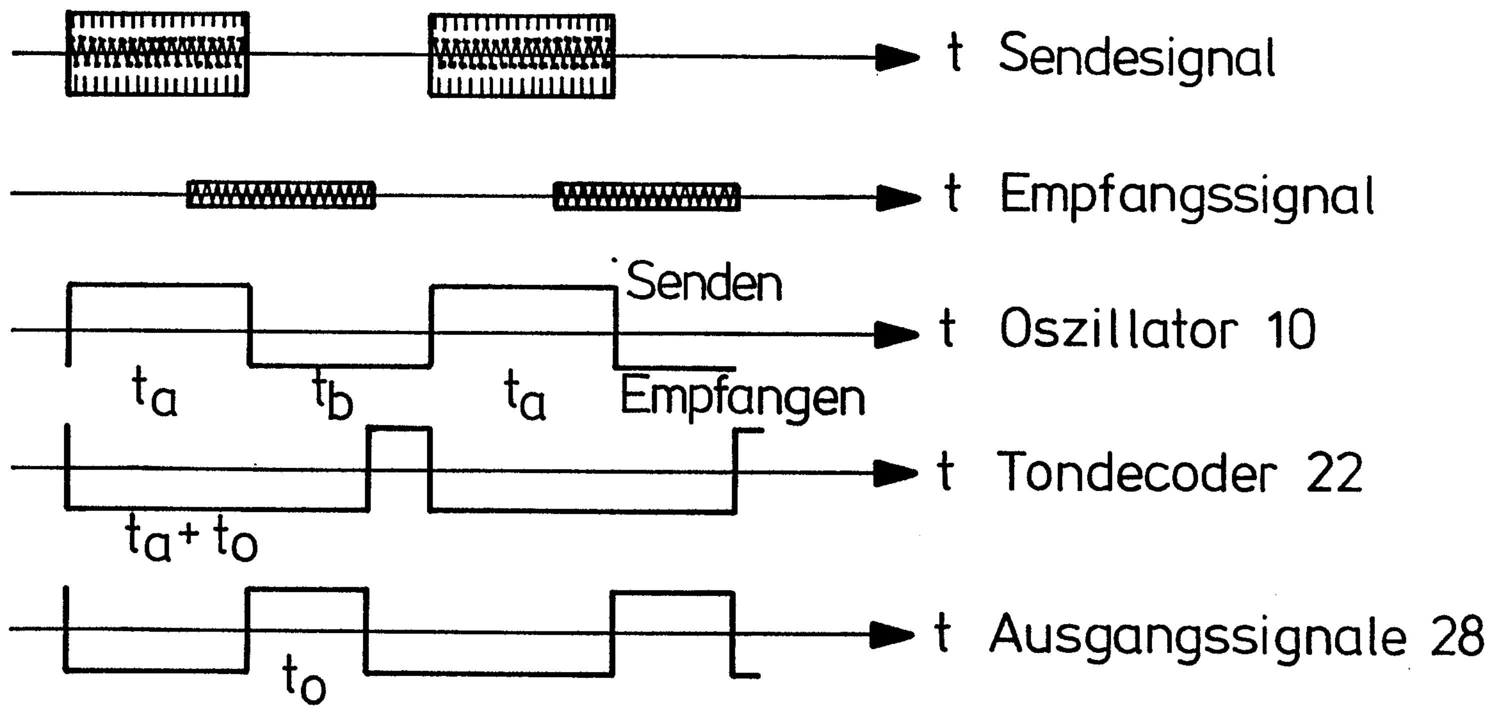
t Sendesignal
t Empfangssignal
Senden
t Oszillator 10
Empfangen
$t_a$
$t_b$
$t_a$
t Tondecoder 22
$t_a + t_o$
t Ausgangssignale 28
$t_o$

Fig. 2b

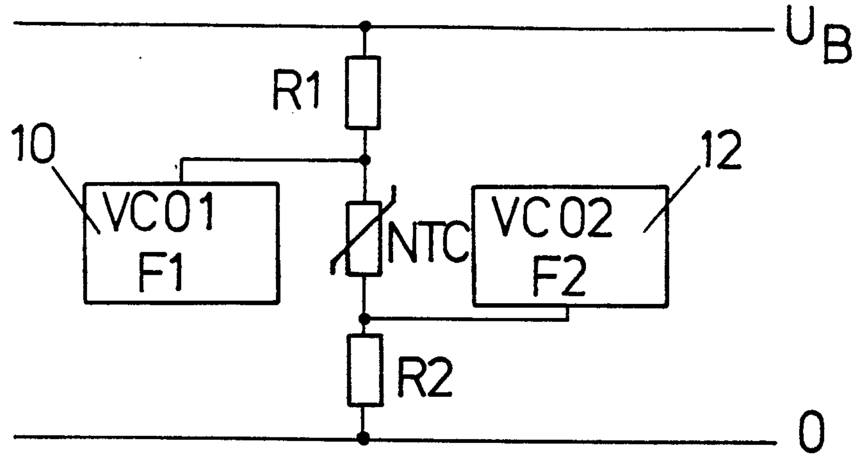


Fig. 3

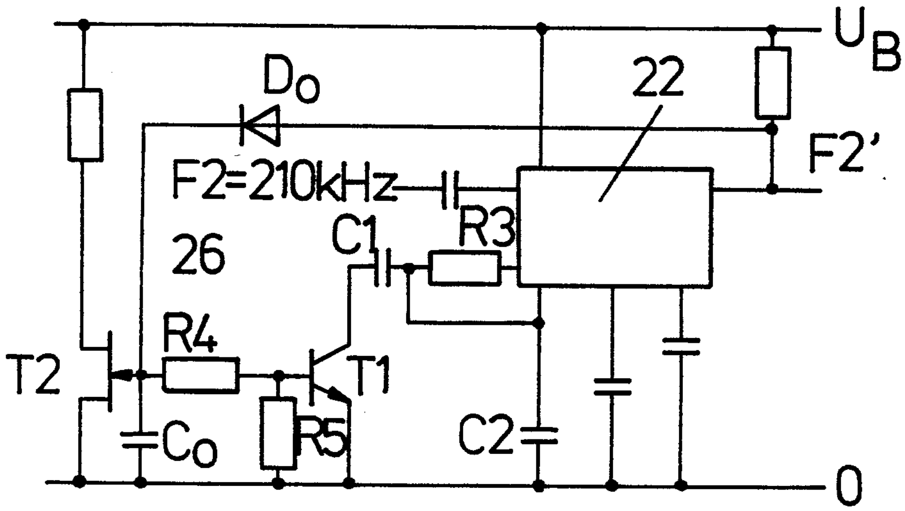


Fig. 4

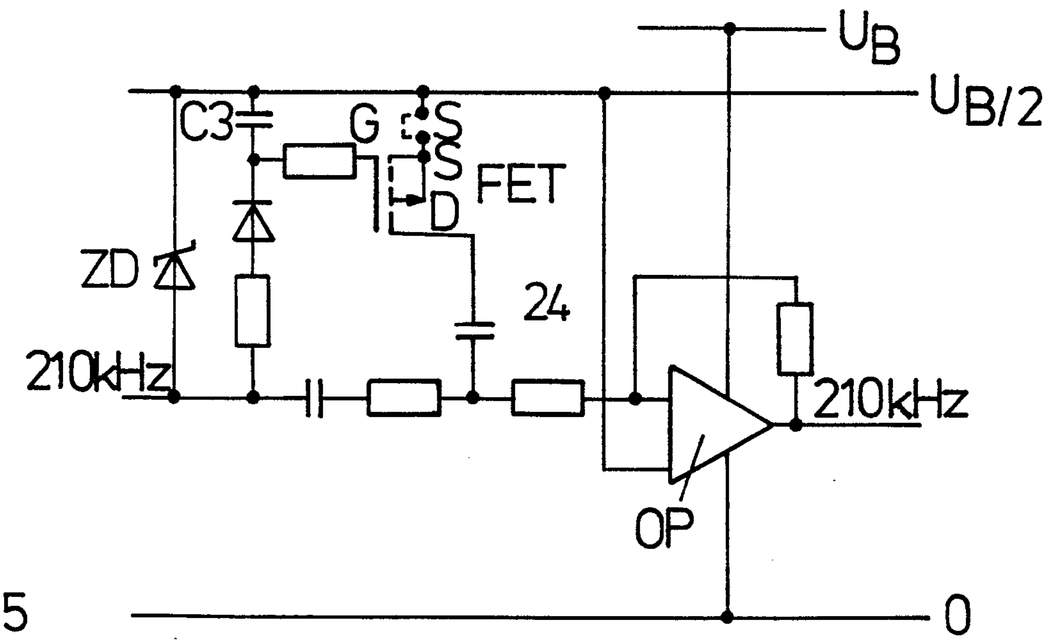


Fig. 5

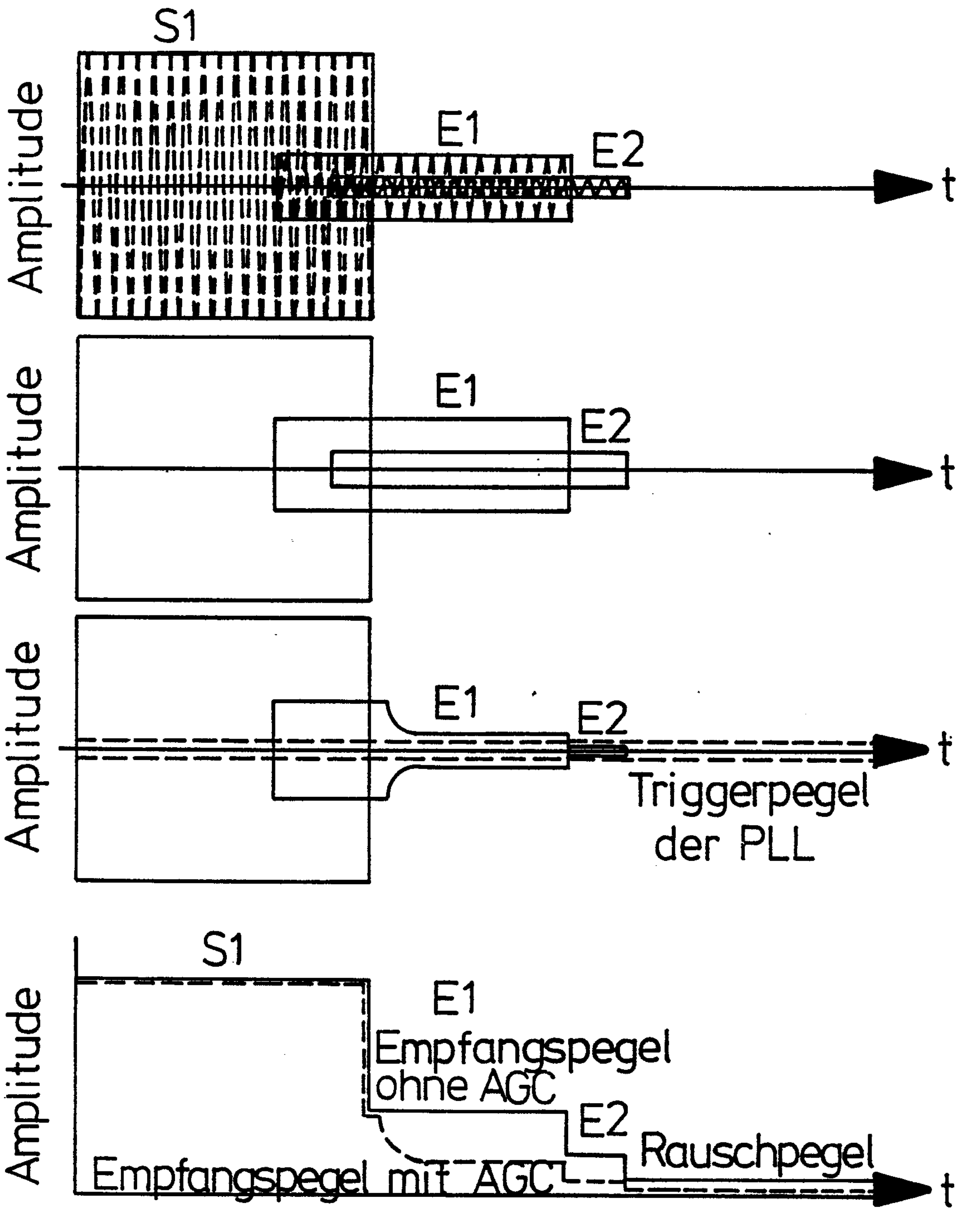
S1
Amplitude
E1
E2
t
Amplitude
E1
E2
t
Amplitude
E1
E2
t
Triggerpegel
der PLL
S1
Amplitude
E1
Empfangspegel
ohne AGC
E2
Rauschpegel
Empfangspegel mit AGC
t

Fig. 6

Europäisches Patentamt

# EUROPÄISCHER RECHERCHENBERICHT

Nummer der Anmeldung

EP 85 11 5287

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A- 736 413 (LABOUREUR UND DUBOIS)<br>* Seite 1, Zeilen 1-33; Seite 3, Zeilen 26-33; Figuren 1,2 * | 1,6 | G 01 S 15/10 |
| Y | | 2-5,7,8 | |
| | --- | | |
| Y | US-A-4 451 909 (M. KODERA et al.)<br>* Zusammenfassung; Figuren 1,2 * | 2-5,7,8 | |
| | --- | | |
| A | GB-A-2 107 870 (GEOTECHNICAL MONITORING)<br>* Seite 2, Zeilen 61-92; Seite 2, Zeile 122 - Seite 3, Zeile 33; Figur 2 * | 9,12 | |
| | --- | | RECHERCHIERTE SACHGEBIETE (Int. Cl.4) |
| A | WO-A-8 102 472 (SONIC TAPE)<br>* Seite 6, Zeile 12 - Seite 7, Zeile 20; Figur 2 * | 10 | G 01 S |
| | --- | | |
| A | US-A-3 431 496 (R.V. O'DONNELL)<br>* Spalte 2, Zeile 13 - Spalte 4, Zeile 37; Figuren 1,2 * | 11 | |
| | --- -/- | | |

Der vorliegende Recherchenbericht wurde für alle Patentansprüche erstellt.

| Recherchenort | Abschlußdatum der Recherche | Prüfer |
|---|---|---|
| DEN HAAG | 04-08-1986 | VAN WEEL E.J.G. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

Europäisches Patentamt

**EUROPÄISCHER RECHERCHENBERICHT**

Nummer der Anmeldung

EP 85 11 5287

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | PATENTS ABSTRACTS OF JAPAN, Band 7, Nr. 196 (P-219) [1341], 26. August 1983; & JP - A - 58 95275 (RIYOUKO TAKADA) 06-06-1983 * Zusammenfassung * | 1,6,8 | |
| | --- | | |
| A | US-A-4 225 950 (M. KOTERA et al.) * Spalte 5, Zeilen 45-68; Figur 4 * | 2-5,7, 8 | |
| | ----- | | |

RECHERCHIERTE SACHGEBIETE (Int. Cl.4)

Der vorliegende Recherchenbericht wurde für alle Patentansprüche erstellt.

| Recherchenort | Abschlußdatum der Recherche | Prüfer |
|---|---|---|
| DEN HAAG | 04-08-1986 | VAN WEEL E.J.G. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument